# EUROPÄISCHE PATENTANMELDUNG

(11) **EP 0 801 258 A2**
(43) Veröffentlichungstag der Anmeldung: **15.10.1997**
(21) Anmeldenummer: 97104460.7
(22) Anmeldetag: 15.03.1997
(51) Int. Cl.: F16L 25/00, F16L 23/02

(54) **Anschlussverbindung zwischen einem Bauteil und einem rohrförmigen Leitungselement**

(30) Priorität: 12.04.1996 DE 29606683 U
(71) Anmelder: Witzenmann GmbH Metallschlauch-Fabrik Pforzheim, D-75175 Pforzheim (DE)
(72) Erfinder: Winzen, Wilfired, Dr., 75175 Pforzheim (DE); Wildermuth, Eberhard, Dr., 75181 Pforzheim (DE)
(74) Vertreter: Lemcke, Rupert, Dipl.-Ing.

(57) **Zusammenfassung**

Es wird eine Anschlußverbindung zwischen einem Bauteil (3) in Form eines Rohres, einer Armatur, eines Gehäuses oder dergleichen und einem rohrförmigen Leitungselement (4,13) aus Metall angegeben, wobei das Bauteil (3) eine im wesentlichen radial verlaufende, ringförmige Anlagefläche (9) aufweist, gegen die ein am Leitungselement angeordneter, ringförmiger Bund (5,19) durch ihn hintergreifende Befestigungsmittel gespannt ist. Dabei ist vorgesehen, daß der Bund im Bereich zwischen seinem Innen- und Außendurchmesser wenigstens eine um die Achse des Leitungselementes geschlossen ringförmig umlaufende, axiale Verdickung (10,18) aufweist, und daß die Verdickung durch axiales Zusammendrücken mindestens einer nach radial außen gerichteten und mindestens einer in Axialrichtung daneben angeordneten, nach radial innen gerichteten Ringwelle (12,17) der den Bund bildenden Wandung hergestellt ist.

## Beschreibung

Die Erfindung betrifft eine Anschlußverbindung zwischen einem Bauteil in Form eines Rohres, einer Armatur, eines Gehäuses oder dergleichen und einem rohrförmigen Leitungselement aus Metall, wobei das Bauteil im Bereich seines dem Leitungselement zugewandten Endes eine im wesentlichen radial verlaufende, ringförmige Anlagefläche aufweist, gegen die ein am Leitungselement endständig angeordneter, zur Anlagefläche im wesentlichen parallel verlaufender, ringförmiger Bund durch ihn hintergreifende und dabei an ihm anliegende Befestigungsmittel gespannt ist.

In Fällen der vorgenannten Art kann das Leitungselement ein Glattrohr, insbesondere ein dünnwandiges Rohr sein. Es kommen jedoch auch Wellrohre, Wellschläuche oder Bälge mit schraubengangförmiger oder ringförmiger Wellung in Frage. Der Querschnitt des Leitungselementes ist in der Regel kreizylindrisch. Andere Querschnittsformen, insbesondere ovale sind jedoch ebenso auch für die Anschlußverbindung denkbar.

Was das Bauteil betrifft, so sind dafür ein Rohr, eine Armatur, ein Gehäuse oder dergleichen als Beispiele genannt. Konkreter kann hier z. B. auf das Ventilgehäuse einer Einrichtung zur Abgasrückführung hingewiesen werden, bei der das Leitungselement und damit auch die Anschlußverbindung von einem heißen und aggressiven Abgas durchströmt sind. Hier muß nicht nur das Leitungselement temperatur- und korrosionsfest sein, sondern es muß auch die Anschlußverbindung absolut dicht sein, um den Austritt des Abgases auszuschließen.

Bei einer Anschlußverbindung der so umrissenen Art wird der Bund gegen die Anlagefläche des Bauteiles gespannt. Das kann bei Ausstattung des Bauteiles mit einem endständigen Flansch dadurch geschehen, daß der Bund von einem Flanschring hintergriffen wird, der dann mit dem genannten Flansch beispielsweise durch Schrauben verspannt wird. Eine andere Möglichkeit kann dadurch gegeben sein, daß das Bauteil am Ende oder im Bereich des Endes eine ringförmige Verdickung mit im wesentlichen trapezförmigem Axialquerschnitt aufweist. Neben die dem Leitungselement zugewandte Schrägfläche dieser Verdickung wird der entsprechend schräg gestellte Bund gelegt, wobei dann das Ganze beispielsweise durch eine Schelle mit V-förmigen Querschnitt umgriffen wird. Durch Spannen der Schelle werden Verdickung und Bund axial zusammengedrückt. Eine weitere Möglichkeit kann in einer Schraubverbindung zwischen dem Gehäuse und einer Mutter bestehen, die den Bund gegen die Anlagefläche spannt.

Bei einem bekannten Beispiel für eine solche Verbindung ist zur Herstellung der erforderlichen Dichtheit zwischen Anlagefläche und Bund ein ringförmiger Dichtring eingelegt. Dies verteuert jedoch die Anschlußverbindung und macht wegen dieses verlierbaren Bauteiles besondere Aufmerksamkeit und zusätzliche Maßnahmen bei der Herstellung der Anschlußverbindung erforderlich.

Man hat auch schon versucht, dem dadurch zu begegnen, daß man in den Bund eine kreisringförmige, axial vorstehende Sicke eingeprägt hat. Auch damit ist jedoch eine vollkommene Abdichtung nicht mit Sicherheit erreichbar, da die Sicke unter den bei der Herstellung der Anschlußverbindung aufgebrachten Spannkräften wieder flachgedrückt wird, wobei auch Verwerfungen oder eine Faltenbildung des den Bund darstellenden Materiales auftreten, die erst recht einer absoluten Abdichtung entgegenstehen. Dies gilt insbesondere dann, wenn das Leitungselement und damit in der Regel auch der Bund aus Gründen der Flexibilität besonders dünnwandig sind, wo dann eine solche Sicke kaum eine nennenswert in Gewicht fallende Eigensteifigkeit aufweist.

Aufgabe der Erfindung ist es daher, eine Anschlußverbindung der eingangs genannten Art derart weiter aus zugestalten, daß sie auch ohne das Erfordernis einer zusätzlichen Dichtung hohen Anforderungen an eine vollkommene Dichtheit genügt, dabei aber gleichzeitig einfach, kostengünstig und standfest gestaltet ist.

Dieses Aufgabe ist erfindungsgemäß dadurch gelöst, daß der Bund im Bereich zwischen seinem Innen- und Außendurchmesser wenigstens eine um die Achse des Leitungselementes geschlossen ringförmig umlaufende, axiale Verdickung aufweist, und daß die Verdickung durch axiales Zusammendrücken mindestens einer nach radial außen gerichteten und mindestens einer in Axialrichtung daneben angeordneten, radial innen gerichteten Ringwelle der den Bund bildenden Wandung hergestellt ist.

Durch diese Maßnahmen ist außer dem Material des Bundes dort, wo normalerweise ein separater Dichtungsring zu liegen kommt, zusätzliches Wandmaterial angehäuft. Dies sorgt zunächst einmal dafür, daß der Bund im wesentlichen nur entlang einer radial begrenzten Kreisringfläche mit der Anlagefläche in Berührung tritt, so daß die gesamte Anpreßkraft über eine entsprechend sehr kleine Auflage übertragen wird. Dies sorgt zum anderen aber auch dafür, daß das Material an der Stelle, die die Dichtheit garantieren soll, nicht weggedrückt werden kann, weil es nämlich massiv zusammengepreßt ist und ihm dadurch keine Ausweichmöglichkeit mehr bleibt. Dies sorgt aber schließlich auch dafür, daß der Bund im Bereich der Verdickung eine Aussteifung erfährt, so daß einem Verziehen des Materiales oder gar einer Faltenbildung wirksam entgegengetreten ist.

Die Herstellung der für die Ausbildung der Verdickung herangezogenen Ringwellen bereitet keinerlei besondere Schwierigkeiten, da sie mit der Herstellung der Wellen für ein Wellrohr oder einen Wellschlauch übereinstimmt, so daß die genannten Ringwellen insbesondere dann gleichzeitig leicht mit angebracht werden können, wenn das Leitungselement als Wellrohr oder Wellschlauch hergestellt wird.

Wie sich bereits aus dem Vorstehenden ergibt, können die von Innen- und Außendurchmesser des Bundes abweichenden Innendurchmesser der nach innen gerichteten Ringwelle und Außendurchmesser der nach außen gerichteten Ringwelle verhältnismäßig nahe beieinanderliegen, also daß die Verdickung des Bundes in Radialrichtung relativ schmal ausfällt mit der Tendenz, daß, je schmäler die Verdickung in Radialrichtung ist, je höher die dichtende Flächenpressung an der Verdickung ausfällt.

Neben einer nach innen und einer nach außen gerichteten Ringwelle kann je nach Umständen des Einzelfalles, insbesondere bei einem sehr dünnwandigen Leitungselement, selbstverständlich in Axialrichtung nebengeordnet, auch noch wenigstens eine weitere Ringwelle entsprechend angeschlossen werden, um auf diese Weise das Maß der genannten Materialanhäufung im Bereich der Verdickung zu steuern.

Genauso ist es möglich, den Bund mit beispielsweise zwei ringförmigen Verdickungen auszustatten, die dann in Radialrichtung des Bundes mit Abstand nebeneinander anzuordnen wären. Zur Vorbereitung zweier solcher Verdickungen wäre es lediglich erforderlich, diese bildenden Ringwellen an entsprechend unterschiedlicher Radiallage zu positionieren.

Zweckmäßigerweise sind Bund und Verdickung aus dem zugeordneten Ende des Leitungselementes geformt. Es besteht jedoch auch die Möglichkeit, daß der die Verdickung aufweisende Bund mit dem Ende des Leitungselementes durch ein Fügeverfahren, beispielsweise durch Schweißen, verbunden ist.

Was die Anlagefläche betrifft, so kann diese durch einen endständigen Flansch des Bauteiles gebildet sein, oder aber auch durch eine Verdickung, beispielsweise einen verdickten Ringrand oder eine Sicke am Ende des Bauteiles oder im Bereich dieses Endes, wobei dann der Flansch bzw. die Verdickung wieder in der bereits beschriebenen Weise im Axialquerschnitt im wesentlichen trapezförmig ausgebildet sein können, so daß neben den bei Flanschen als Befestigungsmittel in Frage kommenden Schrauben im übrigen auch wieder Spannringe, gegebenenfalls in Form von V-Bandschellen, als Befestigungsmittel verwendbar sind.

Bei allen bisher beschriebenen Bauformen kann im übrigen vorgesehen werden, daß sich an den Außenumfang des Bundes ein im wesentlichen zylindrischer Abschnitt des Bundes anschließt, der an der äußeren Umfangfläche des Bauteilendes bzw. des Flansches oder der Verdickung anliegt. Dadurch ergibt sich eine saubere gegenseitige Zentrierung und es wird im übrigen ein Beitrag für die Stabilität der Anschlußverbindung geleistet, insbesondere dann, wenn der Spannring auch noch mit einem sich in Axialrichtung erstreckenden Umfangsabschnitt radial von außen her am zylindrischen Abschnitt des Bundes anliegt.

Bezüglich der Ausbildung des Leitungselementes eignet sich der Gegenstand der Erfindung besonders in Verbindung mit verhältnismäßig dünnwandigen Leitungselementen, wobei im übrigen die Anwendung nicht nur auf einwandige Leitungselemente beschränkt ist. Vielmehr kommen auch mehrlagige Leitungselemente in Frage, wobei nicht unbedingt sämtliche Lagen aus Metall bestehen müssen, vielmehr für die einzelnen Lagen auch je nach den Anforderungen unterschiedliche Materialen in Frage kommen.

Weitere erfindungswesentliche Merkmale und Einzelheiten ergeben sich aus der nachfolgenden Beschreibung von Ausführungsformen, die auf der Zeichnung dargestellt sind. In der Zeichnung zeigen:
- Figur 1: einen ausschnittweisen Axialschnitt durch eine erfindungsgemäße Anschlußverbindung;
- Figur 2: das Ende eines Leitungselementes im teilweisen Axialschnitt und in einer Zwischenstufe der Fertigung und
- Figur 3: das Leitungselement gemäß Figur 2 in fertig gestelltem und eingebautem Zustand.

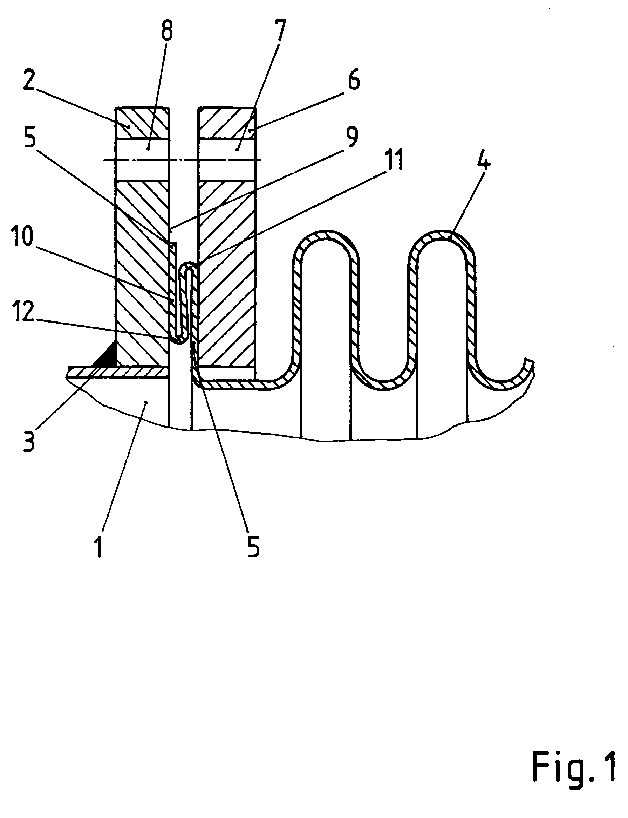

Figur 1 zeigt das Ende eines Rohres 1, auf dessen Äußerem ein Flanschring 2 durch eine Verschweißung 3 dicht befestigt ist.

Ferner ist ersichtlich, ein Leitungselement 4 in Form eines Ringwellrohres, -schlauches oder -balges, aus dem an seinem dem Rohr 1 zugewandten Ende ein Bund 5 nach radial außen aufgebogen ist. Hinter den Bund 5 ist ein Flanschring 6 eingesetzt, der über den Umfang verteilt achsparallele Bohrungen 7 aufweist, die mit Bohrungen 8 des Flanschringes 2 fluchten. Die Bohrungen 7, 8 sind von Spannschrauben durchsetzbar, über die die Flanschringe 2, 6 gegeneinander gespannt werden können, so daß der Bund 5 zwischen diesen dichtend eingeklemmt und damit gegen die Anlagefläche 9 des Flanschringes 2 gedrückt wird.

Um nun die Dichtigkeit dieser Verbindung zwischen Rohr 1 und Leitungselement 4 erheblich zu erhöhen, ist der Bund 5 mit einer kreisförmig geschlossen umlaufenden Verdickung 10 ausgestattet, die beim Einspannen des Bundes zwischen den Flanschringen 2 und 6 eingepreßt wird und dabei eine verhältnismäßig kleine Ringfläche äußerst hoher und nicht unterbrochener Dichtwirkung ergibt. Die Verdickung 10 ist durch eine nach radial außen gerichtete Ringwelle 11 und eine in Axialrichtung daneben angeordnete, nach radial innen gerichtete Ringwelle 12 gebildet, wobei die Ringwellen in Axialrichtung zusammengedrückt bzw. miteinander verpreßt sind. Wie ersichtlich, liegen Außendurchmesser der Ringwelle 11 und Innendurchmesser der Ringwelle 12 zwischen innerem und äußerem Durchmesser des Bundes 5, wobei die radiale Erstreckung der Verdickung 10 durch die Wahl der genannten Durchmesser der Ringwellen 11 und 12 steuerbar ist.

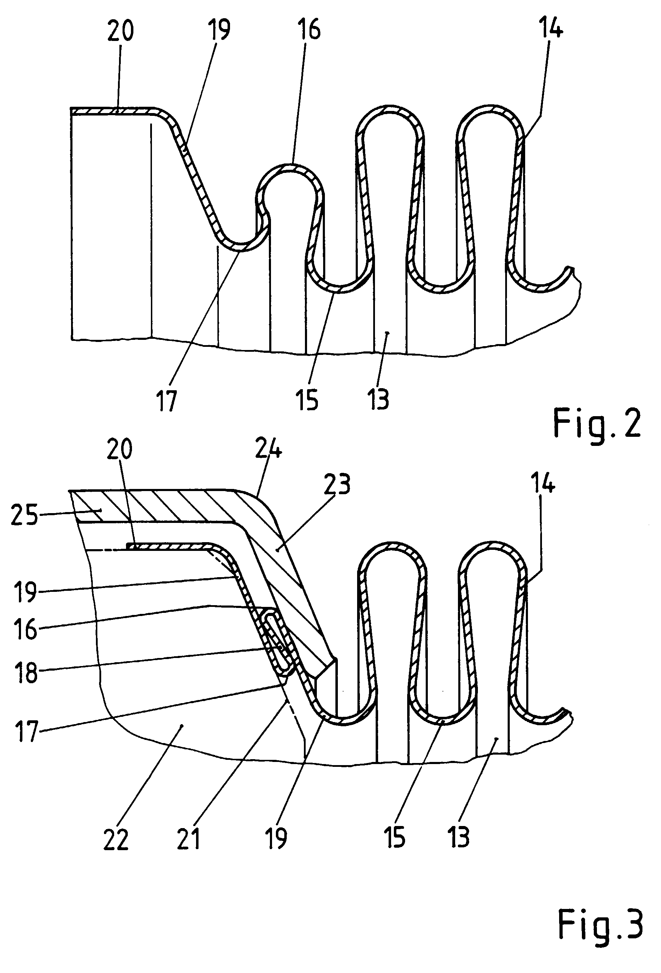

Figur 2 zeigt ein Leitungselement 13 in Form eines Ringwellrohres mit gleich groß nach außen gerichteten Ringwellen 14 und nach innen gerichteten Ringwellen 15. Die letzten beiden Ringwellen 16 und 17 sind wieder bezüglich Ringwelle 16 im Außendurchmesser gegenüber den Ringwellen 14 reduziert bzw. bezüglich der nach innen gerichteten Ringwelle 17 im Innendurchmesser gegenüber den Ringwellen 15 erweitert, womit sich nach entsprechender axialer Verformung die aus dem Einbauzustand gemäß Figur 3 ersichtliche Verdickung 18 ergibt. Wie bereits beim Beispiel gemäß Figur 1 wird im übrigen der Bund 19 durch die bezogen auf die Zeichnung nach links auslaufende Flanke der Ringwelle 17 sowie die von rechts einlaufende Flanke der Ringwelle 16 gebildet.

An das freie Ende des Bundes 19 schließt sich noch ein im wesentlichen zylindrischer Abschnitt 20 an.

Das in Figur 2 in einer Zwischenstufe der Fertigung gezeigte Ende des Leitungselementes 13 ist in Figur 3 in eingebautem Zustand gezeigt, wo es mit dem Bund 19 gegen die schräg gestellte Flanke 21 einer strichpunktiert gezeichneten trapezförmigen Verdickung 22 am Ende eines nicht dargestellten Bauteiles anliegt. Übergriffen bzw. hintergriffen ist der Bund 19 durch den Schenkel 23 einer V-Bandschelle 24, die nur teilweise dargestellt ist und im übrigen in an sich bekannter Weise die Verdickung 22 auf der dem Schenkel 23 gegenüberliegenden Seite mit einem entsprechenden Schenkel hintergreift.

Parallel zum zylindrischen Abschnitt 20 weist die V-Bandschelle einen sich in Axialrichtung erstreckenden Umfangsabschnitt 25 auf, der im vorliegenden Fall vom zylindrischen Abschnitt 20 radial beabstandet ist. Die Gestaltung der V-Bandschelle 24 kann jedoch auch so erfolgen, daß der Umfangsabschnitt 25 bei gespannter Bandschelle in wenn auch nur leichter Anlage gegen den zylindrischen Abschnitt 20 kommt.

Beide anhand der Figuren 1 und 3 dargestellten Ausführungsformen haben gemeinsam, daß in der geschilderten Weise der Bund 5 bzw. 19 mit einer Verdickung durch Materialanhäufung versehen ist, die sich einerseits auf konventionelle Weise leicht herstellen läßt und zum anderen eine Versteifung des Bundes ergibt und eine vollkommen dichte Anschlußverbindung garantiert. In den geschilderten Fällen ist die Verdickung 10 bzw. 18 durch Zusammenpressen zweier Ringwellen 11, 12 bzw. 16, 17 hergestellt. Es besteht jedoch gerade auch für sehr dünnwandige Leitungselemente 4 bzw. 13 in einfacher Weise die Möglichkeit, die Materialanhäufung für die Verdickung durch Einbeziehen wenigstens einer weiteren Ringwelle noch zu vergrößern. Unter Bezugnahme auf Figur 2 kann dies beispielsweise dadurch geschehen, daß auch den beiden rechts neben der Ringwelle 16 gelegenen Ringwellen 15 und 14 des Leitungselementes 13 die radialen Abmessungen gegeben werden, wie sie die Ringwellen 16 und 17 haben, um diese beiden Ringwellen weiterhin mit in die Bildung der Verdickung des Bundes einzubeziehen.

## Patentansprüche

1. Anschlußverbindung zwischen einem Bauteil in Form eines Rohres, einer Armatur, eines Gehäuses oder dergleichen und einem rohrförmigen Leitungselement aus Metall, wobei das Bauteil im Bereich seines dem Leitungselement zugewandten Endes eine im wesentlichen radial verlaufende, ringförmige Anlagefläche aufweist, gegen die ein am Leitungselement endständig angeordneter, zur Anlagefläche im wesentlichen parallel verlaufender, ringförmiger Bund durch ihn hintergreifende und dabei an ihm anliegende Befestigungsmittel gespannt ist,
dadurch gekennzeichnet,
daß der Bund (5, 19) im Bereich zwischen seinem Innen- und Außendurchmesser wenigstens eine um die Achse des Leitungselementes (4, 13) geschlossen ringförmig umlaufende, axiale Verdickung (10, 18) aufweist, und daß die Verdickung (10, 18) durch axiales Zusammendrücken mindestens einer nach radial außen gerichteten (11, 16) und mindestens einer in Axialrichtung daneben angeordneten, nach radial innen gerichteten Ringwelle (12, 17) der den Bund (5, 19) bildenden Wandung hergestellt ist.

2. Anschlußverbindung nach Anspruch 1,
dadurch gekennzeichnet,
daß die von Innen- und Außendurchmesser des Bundes (5, 19) abweichenden Innendurchmesser der nach innen gerichteten Ringwelle (12, 17) und Außendurchmesser der nach außen gerichteten Ringwelle (11, 16) verhältnismäßig nahe beieinanderliegen.

3. Anschlußverbindung nach Anspruch 1 oder 2,
dadurch gekennzeichnet,
daß bei mehreren ringförmigen Verdickungen (10, 18) des Bundes (5, 19) diese in Radialrichtung mit Abstand nebeneinander angeordnet sind.

4. Anschlußverbindung nach einem oder mehreren der Ansprüche 1 bis 3,
dadurch gekennzeichnet,
daß Bund (5, 19) und Verdickung (10, 18) aus dem zugeordneten Ende des Leitungselementes (4, 13) geformt sind.

5. Anschlußverbindung nach einem oder mehreren der Ansprüche 1 bis 3,
dadurch gekennzeichnet,
daß der Bund mit dem Ende des Leitungselementes durch ein Fügeverfahren, beispielsweise durch Schweißen, verbunden ist.

6. Anschlußverbindung nach einem oder mehreren der Ansprüche 1 bis 5,
dadurch gekennzeichnet,
daß die Anlagefläche (9) durch einen endständigen Flansch (2) des Bauteiles (1) gebildet ist.

7. Anschlußverbindung nach einem oder mehreren der Ansprüche 1 bis 5,
dadurch gekennzeichnet,
daß die Anlagefläche (21) durch eine Verdickung (22), beispielsweise einen verdickten Ringrand oder eine Sicke am Ende des Bauteiles oder im Bereich dieses Endes gebildet ist.

8. Anschlußverbindung nach Anspruch 6 oder 7,
dadurch gekennzeichnet,
daß der Flansch bzw. die Verdickung (22) im Axialquerschnitt im wesentlichen trapezförmig ausgebildet ist.

9. Anschlußverbindung nach einem oder mehreren der Ansprüche 1 bis 8,
dadurch gekennzeichnet,
daß die Befestigungsmittel (6) mit dem Ende des Bauteiles (1) bzw. dem Flansch (2) oder der Verdickung durch Schraubmittel verbunden sind.

10. Anschlußverbindung nach einem oder mehreren der Ansprüche 1 bis 8,
dadurch gekennzeichnet,
daß die Befestigungsmittel durch einen das Ende des Bauteiles mit erfassendem Spannring (24), gegebenenfalls V-Bandschelle gebildet sind.

11. Anschlußverbindung nach Anspruch 10,
dadurch gekennzeichnet,
daß der Spannring (24) zumindest an einer Umfangsstelle geteilt und im Teilungsbereich zusammenfügbar ist.

12. Anschlußverbindung nach Anspruch 11,
dadurch gekennzeichnet,
daß der Spannring (24) im Teilungsbereich mittels Spannmitteln, z. B. mindestens einer Spannschraube, zusammfügbar ist.

13. Anschlußverbindung nach einem oder mehreren der Ansprüche 1 bis 12,
dadurch gekennzeichnet,
daß sich an den Außenumfang des Bundes (19) ein im wesentlichen zylindrischer Abschnitt (20) des Bundes (19) anschließt, der an der äußeren Umfangsfläche des Bauteilendes bzw. des Flansches oder der Verdickung (22) anliegt.

14. Anschlußverbindung nach einem oder mehreren der Ansprüch 1 bis 13,
dadurch gekennzeichnet,
daß der Spannring (24) mit einem sich in Axialrichtung erstreckenden Umfangsabschnitt (25) radial von außen her am zylindrischen Abschnitt (20) des Bundes (19) anliegt.

15. Anschlußverbindung nach einem oder mehreren der Ansprüche 1 bis 14,
dadurch gekennzeichnet,
daß das Leitungselement (4, 13) und gegebenenfalls der Bund (5, 19) dünnwandig ausgebildet sind.

16. Anschlußverbindung nach einem oder mehreren der Ansprüche 1 bis 15,
dadurch gekennzeichnet,
daß das Leitungselement (4, 13) und gegebenenfalls der Bund (5, 19) mehrlagig ausgebildet sind.
